Europäisches Patentamt

European Patent Office

Office européen des brevets

(11) Publication number: **0 189 196**
**A2**

# (12) EUROPEAN PATENT APPLICATION

(21) Application number: **86100852.2**

(22) Date of filing: **23.01.86**

(51) Int. Cl.⁴: **H 01 S 3/30**

(30) Priority: **25.01.85 US 694813**

(43) Date of publication of application: **30.07.86**
**Bulletin 86/31**

(84) Designated Contracting States: **DE FR GB NL**

(71) Applicant: **POLAROID CORPORATION, 549 Technology Square, Cambridge, Massachusetts 02139 (US)**

(72) Inventor: **Hicks, John W., Jr., 312 Howard Street, Northboro, MA 01532 (US)**

(74) Representative: **Koch, Günther, Dipl.-Ing. et al, Kaufingerstrasse 8, D-8000 München 2 (DE)**

(54) **Raman amplified filter tap system.**

(57) A device for the Raman effect amplification of light energy includes a closed resonant loop defined by an optical fiber that includes a material having a characteristic Raman gain curve. The resonant loop is coupled to an optical trunk line that carries a plurality of wavelength-distinct information-bearing signals and removes and resonantly supports a portion of the light energy of a selected information-bearing signal from the trunk line. A laser is coupled to the resonant loop and introduces shorter wavelength pumping light energy into the loop to effect amplification of the resonantly supported information-bearing signal by the Raman effect. In another form, shorter wavelength pumping light energy is introduced into the laser so as to alter the output of the laser diode to effectively tune the pump line for amplifying a selected wavelength-distinct information-bearing signal.

0189196

## BACKGROUND OF THE INVENTION

The present invention relates to the removal and amplification of light energy from optical fiber waveguides. More particularly it concerns an apparatus for filtering a selected information-bearing wavelength or wavelengths from an optical fiber communications trunk and amplifying the removed wavelength by the Raman effect.

In optical fiber communications systems employing optical fiber trunk lines that carry a large number of wavelength-distinct information-bearing signals, a need exists for a device for removing selected wavelengths of light energy from the trunk line for propagation along a branch line. Devices that are effective in removing or filtering selected wavelengths of light energy from an optical waveguide are disclosed in Applicant's commonly assigned U.S. patent application Serial No. 625,543, filed June 28, 1984 for OPTICAL RESONANT CAVITY FILTERS. In general, such devices must remove as small a quantum of energy as possible from the trunk line, since each increment of removed energy represents a cumulative decrease in the energy available in the trunk line for subsequent distribution. Where devices can successfully remove only a small portion of the energy in the trunk line, for example, 1-2%, the energy available in the branch line is oftentimes too small to be meaningful and, accordingly, a need arises for amplification of the removed light energy.

-1-

Light amplification has been effected by both electronic and optical techniques. Where electronic techniques are utilized, the light energy is converted to an electrical signal, amplified through conventional electronic devices, and reconverted to an optical signal for further propagation. Electronic signal amplification has the disadvantage of requiring an interruption in the physical integrity of the optical fiber to insert the electronic devices. Optical amplification has been effected utilizing the Raman effect by which a pumping light source is introduced into a signal carrying optical fiber having a light transmitting core fabricated from a material that has a characteristic Raman gain curve. The wavelength of the Raman pumping light is shorter than that of the information-bearing signal by a predetermined number of wavelengths to permit photons of the Raman pumping light to be converted to the wavelength of the information-bearing signal and thereby effect a gain increase. Generally, the Raman gain curve for most materials is rather broad and, accordingly, Raman effect amplification is considered most appropriate in broad band applications.

Broadband Raman effect amplification techniques are disclosed in Applicant's commonly assigned U.S. Patent application Serial No. 536,655, filed September 23, 1983 for OPTICAL COMMUNICATION SYSTEMS USING RAMAN REPEATERS AND COMPONENTS THEREFOR. While Raman effect optical amplification is well-suited to broadband, repeater type applictions as disclosed in the Serial No. 536,655 patent application, such broadband amplification is less suited to wavelength amplification where much narrower bands of wavelengths are filtered from a trunk line, as disclosed, for example, in the aforementioned application Serial No. 625,543. Accordingly, a need arises for a device for filtering selected wavelengths

-2-

of light energy from an optical fiber trunk line and efficiently amplifying the removed wavelengths.

SUMMARY OF THE INVENTION

In accordance with the present invention, selected wavelengths of light energy propagated in an optical fiber communications trunk line are filtered from the trunk line by coupling to a resonator defined by an optical fiber formed into a resonant loop. The resonant loop has an effective optical length that resonates the wavelengths of interest and includes a light conducting core fabricated from a material having a characteristic Raman gain curve. The resonator is provided with pumping energy from a pumping source, such as a laser diode, at a selected wavelength that is shorter by a predetermined amount than the wavelength of interest so that light energy from the pumping source is added to the wavelengths of interest through the Raman effect to provide a gain increase. Where a laser is utilized as the pumping light source, light output thereof can be altered to provide tunable pumping light by introducing light from a suitable source into the resonant cavity of the laser to alter light output of the latter. In addition, a pumping light feedback loop can be provided to return pumping light from the resonator to the pumping light source to enhance device operation.

A principal objective of the present invention is, therefore, the provision of an improved device for filtering a selected information-bearing wavelength or wavelengths from an optical fiber communications transmission line and amplifying the wavelength or wavelengths by the Raman efect. Other objects and further scope of applicability of the present invention will become apparent from the detailed description to follow, taken in conjunction with the accompanying drawings, in which like parts are designated by like reference characters.

## BRIEF DESCRIPTION OF THE DRAWINGS

Fig. 1 illustrates, in schematic form, a portion of an optical fiber communication line and devices in accordance with the present invention for filtering selected information-bearing wavelengths from the communication line and amplifying the filtered wavelengths by the Raman effect;

Fig. 2 illustrates, also in schematic form, a variation of the structure of Fig. 1, by which information-bearing wavelengths can be selectively removed from the communcation line for Raman effect amplification; and

Fig. 3 illustrates, also in schematic form, a further variation of the structure of Fig. 1 in which a feedback loop is established for the Raman pumping energy.

## DESCRIPTION OF THE PREFERRED EMBODIMENT

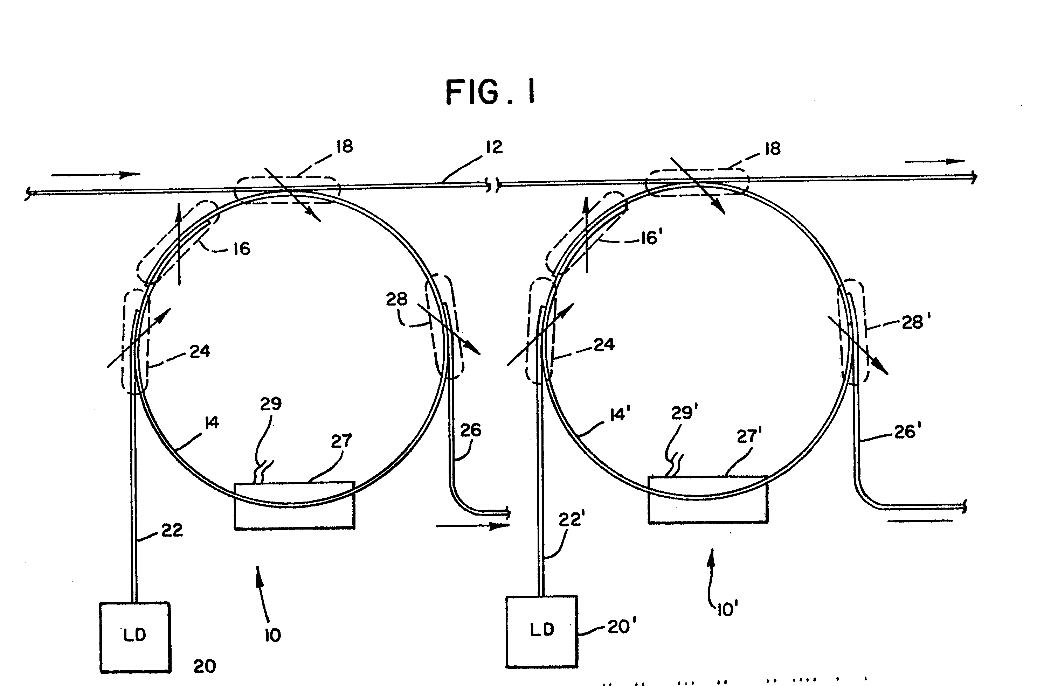

Raman effect devices for filtering and amplifying light energy in accordance with the present invention are illustrated in Fig. 1 and designated generally therein by the reference characters 10 and 10'. The Raman effect devices 10 and 10' are coupled, as described in detail below, to an optical fiber transmission line 12 which is typically part of a much larger communications network and which carries a plurality of wavelength-distinct information-bearing signals. While only two Raman effect devices 10 and 10' are illustrated in Fig. 1, in practice many such devices can be utilized. Since both devices 10 and 10' are identical except for a slight difference in loop length for extracting different wavelengths from the line 12, only device 10 will be described in detail.

The Raman effect device 10 includes a resonator or resonant cavity in the form of a closed optical fiber resonant loop 14 that is functionally closed upon itself, for example, through a lateral coupling 16. The resonant loop 14 has physical characteristics, principally length, that resonantly supports wavelengths that are an integral number of wavelengths of the effective optical length of the fiber cavity, the supported wavelengths including the wavelengths of interest.

The resonant loop 14 is coupled to the transmission line 12 through a lateral coupling 18 in such a manner that only a small percentage of the light energy of the wavelengths of interest propagated in the transmission line, for example 1-2%, is coupled through the lateral coupling 18 into the optical fiber loop 14. In removing light energy from the transmission line 12, it is desirable that only the minimum light energy necessary be removed from the transmission line, since each instance of light energy removal represents a successive cumulative reduction of the light energy remaining in the transmission line for subsequent propagation. The lateral coupling 18 is preferably of the tunable type that permits precise control of the energy transfer, such lateral couplings being disclosed in Applicant's commonly assigned U.S. Patent No. 4,315,666 for COUPLED COMMNICA-TIONS FIBERS.

The optical fiber from which the resonant loop 14 is fabricated includes a core surrounded by a cladding with the core having an index of refraction that is higher than that of the cladding, as is known, to support guided light transmission in the core. The core is fabricated from or includes a material, such as doped fused silica or fused germania, that has a characteristic Raman gain curve. The Raman effect is based on the observation that a material having a characteristic Raman gain curve that is irradiated with light energy from a quasi-monochromatic pumping source will scatter light that is principally of the wavelength of the irradiation and, in addition, longer wavelength, lower frequency light than existed in the original pumping light. For example, a wavenumber difference of 300 to 650 between the pump light and the wavelength of interest will provide reasonable gain in fused silica. The Raman effect is utilized in the present invention to amplify the wavelengths resonantly supported in the resonant loop 124 by introducing shorter wavelength, higher frequency pumping light so that photons of the shorter wavelength pumping light are converted to and effect an increase in gain of the lower frequency, longer information-bearing wavelengths. Additional disclosure relating to Raman effect amplification can be found in the aforementioned Serial No. 536,655 patent application, the disclosure of which is incorporated herein to the extent necessary to practice the present invention.

As shown in Fig. 1, a pumping source in the form of a laser 20, such as a laser diode, is end-coupled to an optical fiber segment 22 that, in turn, is coupled to the resonant loop 14 through a lateral coupling 24. Additionally, an output optical fiber 26, from which the gain-increased wavelength of interest is removed, is coupled to the resonant loop 14 through another lateral coupling 28. In a telecommunications type system, such as disclosed in the Serial No. 536,655 application, the output optical fiber 26 can function as the tap or branch fiber. For precise frequency stability, the effective length of the loop must be maintained constant, and thus each loop is preferrably maintained in a temperature controlled environment, for example, within a temperature controlled package (not shown). However, tuning of the loop 14 to vary its resonance can also be provided by altering the effective length of the loop such as by stressing the fiber, mechanically stretching the loop or altering its temperature, etc. Thus, all or a portion of the loop may be mounted on a piezoelectric or variable temperature plate, as shown at 29. Alternatively, the loop may be cylindrically mounted for such tuning.

The laser 20 is selected to provide a light energy output at a wavelength shorter than the wavelength of interest, or that is shifted a predetermined number of wavenumbers from the longer wavelength information-bearing wavelength removed from the trunk line 12 and resonantly supported in the resonant loop 14. The bandwidth of the pumping light from the laser 20 is preferably somewhat less than the wavelength spacing between adjacent orders supported in the resonant loop 14 so that the Raman effect gain increase is likewise limited to the wavelength of interest supported in the resonant loop 14.

In operation, a portion of the light energy of the wavelengths propagated in the trunk line 12 is transferred through the lateral coupling 18 into the resonant loop 14 where the wavelength of interest is preferentially supported. The laser 20 introduces pumping light energy into the resonant loop 14 at a wavelength sufficiently shorter than that of the wavelength of interest so that a Raman effect gain increase occurs. If the bandwidth of the pumping light is less than the spacing between adajcent orders, as suggested above, the wavelength of interest will undergo a preferential gain increase relative any adjacent side orders. Conversely, the Raman pumping light bandwidth can be widened, for example, by selection of a broad band source, dithering of a narrow line source, or use of multiple sources, to provide a gain increase for a group of adjacent information-bearing wavelengths. Advantageously, the resonant characteristics of the resonant loop 14 can be readily varied to preferentially support any desired wavelength and an appropriate wavelength-shifted higher frequency pump source provided to effect a gain increase of the

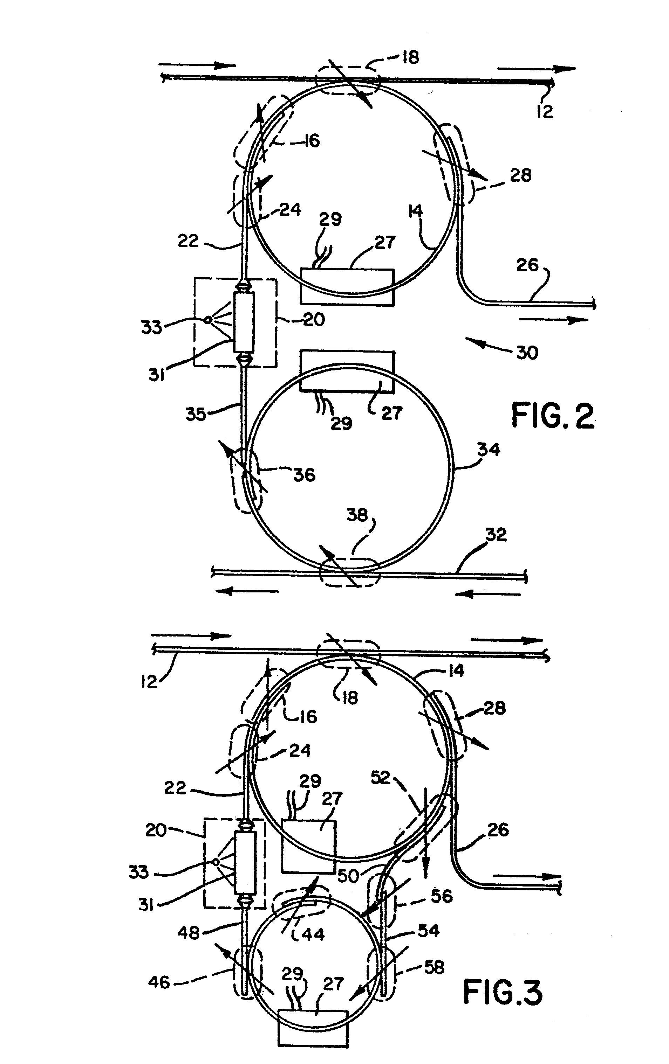

A variation of the Raman effect amplifier 10 of Fig. 1 in which the frequency of the laser diode 20 output can be varied so as to amplify a selected wavelength is illustrated in Fig. 2 and designated generally therein by the reference character 30. In Fig. 2, a source of essentially continuous wave pump light energy at various wavelengths is provided on a pump supply fiber 32. A resonant pump cavity or pump loop 34 is defined by an optical fiber segment closed upon itself such as by a lateral coupling 36. The resonant pump loop 34 is laterally coupled to the pump supply fiber 32 through a lateral coupling 38. The resonant characteristics of the pump loop 34 are selected so as to remove and preferentially support Raman pump energy from one or more of the various wavelengths available from the pump supply fiber 32. The optical fiber that defines the pump loop 34 is extended in fiber section 35 to and into the laser 20 where the pump light is launched in any conventional manner into the resonant structure of the laser. The laser 20 is shown diagrammatically in Fig. 2 to contain a laser cavity 31 laterally pumped by a laser pump source 33 at the laser absorption frequency.

The output of the laser cavity 31 is directed into the fiber 22 for transmission to the resonant filter cavity 14 while the output from the pump cavity 34, as noted, is directed into the cavity 31 to provide the stimulating wavelength thereof and essentially confine the laser output to the wavelength selected by the pump cavity. The fiber-to-laser coupling can be effected, for example, by butting the end of the optical fiber extension onto one end of the laser cavity so that the selected wavelength of pump light from the pump supply fiber 32 is introduced into such cavity. The introduction of pump light of a selected wavelength into the laser cavity has the effect of altering, in a well-known

-8-

manner, the wavelength of the laser output to substantially confine its output to the selected wavelength. Accordingly, by configuring the resonant loop 34 to remove and transfer a selected pump wavelength from the pump supply fiber 32 and using the removed wavelength as the stimulating wavelength of the pump laser 20 to control its operating wavelength, the Raman effect device 30 of Fig. 2 can be used as a variable tuned filter and amplifier for providing various Raman pump wavelengths for amplifying various information-bearing wavelengths removed from the trunk line 12.

The Raman effect devices 10 and 30 of Figs. 1 and 2 are of the open loop type. A Raman effect device having a feedback pathway is shown in Fig. 3 and designated generally therein by the reference character 40. The Raman effect device 40 includes a feedback pathway by which Raman pump light from the resonant loop 14 is returned to the laser 20. As shown in Fig. 3, a resonant, pump· feedback loop 42 is formed from a length of optical fiber that is closed upon itself as by a lateral coupling 44. The feedback loop 42 is coupled through a lateral coupling 46 onto a portion of an optical fiber segment 48 that introduces Raman feedback light into the laser 20. An optical tap fiber 50 is laterally coupled to the resonant feedback loop 14 through a lateral coupling 52 with the other end of the optical tap fiber coupled to another optical fiber segment 54 through a wavelength selective lateral coupling 56. The optical fiber segment 54 is also coupled to the resonant feedback loop 42 through a lateral coupling 58. The wavelength selective lateral coupling 56 is designed to preferentially pass only wavelengths of the Raman pump light and attenuate other wavelengths, including information-bearing wavelengths. Wavelength selective lateral couplings are disclosed in Applicant's commonly assigned U.S. Patent No. 4,342,499 issued August 3, 1982 for COMMUNICATIONS TUNING CONSTRUCTION, the disclosure of which is incorporated herein by reference. The resonant characteristics of the feedback loop 42 are selective, as in the case of the wavelength selective lateral coupling 56, to resonantly support the desired Raman pump light wavelengths.

In operation, the laser 20 introduces pumping light into the resonant filter loop 14 where the information-bearing wavelengths of interest filtered from the trunk line 12 undergo an increase in gain as described above in relationship to Figs. 1 and 2. The Raman pumping light in the filter loop 14 is fed back into the laser 20 by first passing through the lateral coupling 52 and then into the wavelength selective couple 56 which preferentially passes wavelengths at the Raman pump light frequency through the lateral coupling 58 into the resonant feedback loop 42. The wavelengths at the Raman pump light frequency are resonantly supported within the feedback loop 42 and then reintroduced into the laser 20 cavity for return to filter loop 14 to effect a gain increase, as described above, of the information-bearing wavelengths resonantly supported within the resonant loop 14.

The devices disclosed above in accordance with the present invention permit the removal of a minimum amount of light energy from an optical trunk line to minimally diminish the light energy remaining in the trunk line and permits the convenient and efficient amplification of the removed wavelengths for subsequent propagation or processing.

Thus, it will be appreciated from the above that as a result of the present invention, a highly effective device for filtering light energy and amplifying the light energy by the Raman effect is provided by which the principal objective, among others, is completely fulfilled. It will be equally apparent and is contemplated that modification and/or changes may be made in the illustrated embodiment without departure from the invention. Accordingly, it is expressly intended that the foregoing description and accompanying drawings are illustrative of preferred embodiments only, not limiting, and that the true spirit and scope of the present invention will be determined by reference to the appended claims.

What is claimed is:-

1. A device for filtering and amplifying light energy comprising:

filter means defining an optical resonator adapted to be coupled to an optical transmission line propagating wavelength-distinct light energy and for resonantly supporting a selected wavelength coupled from the transmission line, said resonator means including a material having a characteristic Raman gain curve that varies as a function of the difference in wavelength between pumping light energy introduced therein and the selected wavelength resonantly supported in said resonator means; and

means for introducing pumping light energy into said resonator for effecting amplification, by the Raman effect, of the selected wavelengths resonantly supported within said filter resonator.

2. The device of claim 1 wherein said filter means is a resonant cavity defined by an optical fiber loop.

3. The device of claim 1 wherein said filter means is an optical fiber resonant cavity coupled to the optical transmission line through a lateral coupling.

4. The device of claim 1 wherein said pumping means comprises at least one laser source, and said at least one laser source provides pumping light energy to an optical fiber segment that is laterally coupled to said filter means.

5. The device of claim 1 wherein said Raman gain curve is less than the width of the spacing between orders of said filter means.

6. The device of claim 1 further comprising a laser source operative for providing pumping light energy at one or more of a plurality of distinct wavelengths, and resonant pumping means for resonantly supporting one resonant pumping means for resonantly supporting one of the plurality of said pumping light wavelengths and for providing the selected one thereof to said laser source to substantially confine the output thereof to said one wavelength.

7. The device of claim 6 wherein said resonant pumping means comprises an optical fiber resonant loop.

8. The device of claim 6 further comprising means defining a feedback path through said resonant pumping means for feeding back pumping light from said filter means to said laser source.

9. The device of claim 8 further comprising wavelength selective means in said feedback path for selectively passing the pumping light wavelengths to said resonant pumping means.

10. The device of claim 8 wherein said feedback path comprises an optical transmission path extending between said filter means and said laser for passing pumping light wavelengths from said resonator means to said laser.

11. The device of claim 10 wherein said feedback path further comprises a wavelength selective lateral couple for passing pumping light wavelengths.

12. The device of claim 11 wherein said feedback path further comprises a pumping light resonator in said optical transmission path between said wavelength selective lateral couple and said laser diode.

13. The device of claim 12 wherein said pumping light resonator comprises an optical fiber loop having characteristics which resonantly support the pumping light passed through said wavelength selective lateral couple.

14. A device for filtering and amplifying light energy, said device comprising:

filter means comprising an optical resonator cavity adapted to be coupled to an optical transmission line for resonantly supporting at least one select wavelength propagating in the transmission line, said resonator cavity including a material capable of amplifying at least said one resonant wavelength upon pumping of said resonator cavity by light energy of a wavelength related to, but shifted from, the wavelength to be amplified;

a pumping light source operative for pumping light energy at one or more of a plurality of distinct wavelengths; and

means for defining a feedback path for feeding back pumping light energy from said filter means to said light source.

15. The device of claim 14 wherein said feedback path includes an optical fiber loop having characteristics which resonantly support the pumping light energy provided by said source.

16. A device for filtering and amplifying light energy, said device comprising:

filter means comprising an optical resonator cavity adapted to be coupled to an optical transmission line for resonantly supporting wavelengths propagating in said transmission line, said resonator cavity including a material capable of amplifying one or more of its resonant wavelengths upon pumping of said resonator cavity by light energy on one or more of a plurality of select wavelengths;

a pumping light source operative for pumping light energy into said resonator cavity at one or more of said plurality of select wavelengths, said light source being constructed and adapted for producing substantially one dominant frequency in accordance with a select input frequency; and

pump input means for selectively supplying one of said plurality of select frequencies to said source, said pump input means comprising a transmission line carrying said plurality of select frequencies, an optical pump input resonant cavity coupled between said transmission line and said light source for resonating one of said select frequencies and for coupling said one frequency to said source to essentially confine said source to said one frequency.

17. The device of claim 16 wherein said input resonant cavity consists of an optical fiber cavity.

18. The device of claim 16 wherein said source is a laser source having a laser cavity, and said input cavity is coupled to said laser cavity to introduce the resonant wavelength of said input cavity to said laser cavity.

FIG. I

FIG.2

FIG.3